# EUROPÄISCHE PATENTSCHRIFT

(11) **EP 3 883 362 B1**
(45) Veröffentlichungstag und Bekanntmachung des Hinweises auf die Patenterteilung: **15.03.2023**
(21) Anmeldenummer: 19801308.8
(22) Anmeldetag: 07.11.2019
(51) Int. Cl.: A01G 9/14, A01G 31/06, A01G 9/08

(54) **GEWÄCHSHAUSANORDNUNG**
GREENHOUSE ARRANGEMENT
AGENCEMENT POUR SERRE

(30) Priorität: 19.11.2018 DE 102018128966
(43) Veröffentlichungstag der Anmeldung: 29.09.2021
(73) Patentinhaber: Jungheinrich Aktiengesellschaft, 22047 Hamburg (DE)
(72) Erfinder: HARTING, Elmar, 63075 Offenbach (DE); BECKER, Michael, 63512 Hainburg (DE); CAVELIUS, Jörg, 61118 Bad Vilbel (DE)
(74) Vertreter: Keil & Schaafhausen Patentanwälte PartGmbB
(86) Internationale Anmeldenummer: PCT/EP2019/080600
(87) Internationale Veröffentlichungsnummer: WO 2020/104210

(56) Entgegenhaltungen:
- CN-U- 207 783 690
- JP-A- H09 308 377
- US-A1- 2014 090 295

## Beschreibung

Die vorliegende Erfindung betrifft eine Gewächshausanordnung mit einer Kammer, in der mehrere übereinanderliegende Aufnahmepositionen für Pflanzbehälter angeordnet sind, die von einer Beschickungsseite der Kammer aus zugänglich sind.

Eine derartige Gewächshausanordnung wird im sogenannten "Vertical Farming" verwendet, bei dem man eine für die Aufzucht von Pflanzen zur Verfügung stehende Grundfläche vervielfacht, indem man mehrere Etagen übereinander anordnet und in jeder Etage wiederum Pflanzbehälter anordnen kann, in denen Pflanzen wachsen können. Sofern notwendig, kann man in der Kammer auch noch eine Beleuchtungsanordnung vorsehen, die die Pflanzen mit dem zum Wachsen notwendigen Licht versorgt. Die Pflanzbehälter können bereits von vorneherein mit einer Nährlösung versehen sein. Wenn dies nicht der Fall ist, können Mittel vorgesehen sein, um den Pflanzen die notwendigen Nährstoffe zuzuführen.

Die erhöhte Dichte der Pflanzen erhöht das Risiko eines Befalls mit Schädlingen, für deren Bekämpfung im Allgemeinen Insektizide, Pestizide und dergleichen verwendet werden. Dies erhöht einerseits die Produktionskosten für die Aufzucht von Pflanzen in einer derartigen Gewächshausanordnung und vermindert andererseits die Akzeptanz von Pflanzen, die in einer derartigen Gewächshausanordnung wachsen, durch ökologisch bewusst handelnde Verbraucher.

JP H09 308377 A beschreibt eine Vorrichtung für die Pflanzenzucht. Die Vorrichtung ist mit einer Transporteinrichtung ausgestattet, um die Anzuchtschalen von der Aussaatkammer in die Keimkammer, von der Keimkammer in die Begrünungskammer und von der Begrünungskammer in die Anzuchtkammer zu befördern. Weiterhin ist eine Rückführeinrichtung vorgesehen um leere Schalen, aus denen die zu züchtenden Setzlinge entnommen wurden, in die Aussaatkammer zurückzuführen.

CN 207 783 690 U beschreibt eine Wachstumsvorrichtung für Setzlinge, die einen Kultivierungsraum aufweist. Der Kultivierungsraum ist mit einer Wasserversorgung, Lichtanordnung, Gleitschienen und einer Vielzahl von Öffnungen ausgerüstet, wobei durch die Öffnungen auf einem Tablett befindliche Pflanzbehälter in den Kultivierungsraum eingeführt und entnommen wird.

US 2014/090295 A1 beschreibt eine Kultivierungsanordnung, die eine Plattform, ein Nährstoffversorgungssystem und LEDs umfasst. Die Plattform umfasst eine Tragschale mit Kanälen, die jeweils einen Nährstoffilm aufweisen, und einen Pflanzenträger, der auf der Tragschale vorgesehen ist. Die Tragschale kann in einer Richtung entnommen werden, die in der Ebene der Tragschale liegt. Das Nährstoffversorgungssystem versorgt die Tragschale mit Nährstoffen. Weiterhin ist der Pflanzenträger von der Tragschale abnehmbar, wobei im Rahmen der Abnahme des Pflanzenträgers von der Tragschale das Nährstoffsystem nicht von der Tragschale getrennt werden muss. Die LEDs versorgen den Pflanzenträger mit Licht.

Der Erfindung liegt die Aufgabe zugrunde, eine Gewächshausanordnung anzugeben, in der Pflanzen ohne oder mit möglichst wenig Schädlingsbekämpfungsmittel wachsen können.

Diese Aufgabe wird bei einer Gewächshausanordnung der eingangs genannten Art dadurch gelöst, dass die Kammer an der Beschickungsseite durch eine bewegliche Wand begrenzt ist, die eine Öffnung aufweist, die aus einer ersten Position, in der die Kammer von außen nicht zugänglich ist, in mindestens eine zweite Position bewegbar ist, in der eine der Aufnahmepositionen in der Kammer von außen zugänglich ist.

Bei einer derartigen Gewächshausanordnung kann man das Innere der Kammer, also den Raum, in dem die Pflanzen heranwachsen, weitgehend von der Umgebung isolieren. Die Kammer kann, wenn man von kurzen Zeiten, die für das Beschicken und Entnehmen der Pflanzbehälter erforderlich ist, vollständig geschlossen gehalten werden. Hierzu weist die Kammer zumindest an den Seiten, die von der Beschickungsseite ausgehen, geschlossene Wände auf. Auch beim Beschicken wird der Zugang in das Innere der Kammer klein gehalten. Die bewegliche Wand ist so ausgebildet, dass sie die Beschickungsseite nicht vollständig frei gibt, sondern immer nur einen Teil davon, der für das Beschicken oder ggfs. auch Entnehmen der Pflanzbehälter erforderlich ist. Da man beim Beschicken bzw. beim Entnehmen diese Öffnung durch den Pflanzbehälter zumindest teilweise verschließt, wird das Risiko, dass durch diese Öffnung Schädlinge, beispielsweise Insekten oder Pilze, in das Innere der Kammer eingetragen werden, klein gehalten. Ein weiterer Vorteil dieser Ausgestaltung ist, dass man in der Kammer kontrollierte Umgebungsbedingungen aufrechterhalten kann. Die Kammer bleibt auch beim Beschicken und Entladen weitgehend, d. h. bis auf die Öffnung, geschlossen, so dass ein Austausch der Atmosphäre mit der Atmospähre der Umgebung praktisch nicht stattfinden kann.

In einer Ausführungsform der Erfindung weist die Öffnung eine Höhe auf, die an den Abstand zwischen benachbarten Aufnahmepositionen angepasst ist. Die Öffnung ist also tatsächlich auf die Höhe einer Aufnahmeposition begrenzt.

Bevorzugterweise weist die Öffnung einen verstärkten Rand auf. Damit kann die bewegliche Wand insgesamt relativ schwach dimensioniert werden. Der verstärkte Rand der Öffnung sorgt dafür, dass die Kontur der Öffnung auch bei einer Breite der Wand von mehreren Metern so stabil bleibt, dass man einen oder mehrere Pflanzbehälter durch die Öffnung in die Aufnahmeposition bringen kann.

In einer bevorzugten Ausgestaltung ist vorgesehen, dass an der Beschickungsseite ein Regalbediengerät angeordnet ist, das einen Hubwagen aufweist. Der Hubwagen lässt sich in unterschiedliche vertikale Positionen verfahren. Diese Positionen sind den einzelnen Aufnahmepositionen in der Kammer zugeordnet. Mit dem Hubwagen kann man so die Pflanzbehälter in eine Höhe bringen, in der sie geradlinig in die Aufnahmepositionen verschoben werden können.

Vorzugsweise weisen die Wand und der Hubwagen eine Kupplungsanordnung auf, mit der die Wand und der Hubwagen lösbar in Eingriff bringbar sind. Damit lässt sich auf einfache Weise erreichen, dass mit einer Höhenverlagerung des Hubwagens die Wand mitbewegt werden kann. Man kann damit eine Zuordnung des Hubwagens zu der Öffnung erreichen. Ein Pflanzbehälter, der im Hubwagen angeordnet ist, kann dann, wenn der Hubwagen in der richtigen Höhenposition angekommen ist, unmittelbar in die entsprechenden Aufnahmeposition verfahren werden, ohne dass eine zusätzliche Justierung der Öffnung in dieser Position erforderlich wäre. Die Kupplungsanordnung überträgt Antriebskräfte vom Hubwagen auf die Wand in beide Bewegungsrichtungen des Hubwagens, also nach und nach unten.

Vorzugsweise weist der Hubwagen ein Lastaufnahmemittel auf, das im Hubwagen in Horizontalrichtung verfahrbar ist, wobei die Kupplungsanordnung ein Kupplungselement aufweist, das am Lastaufnahmemittel angeordnet ist. Wenn das Lastaufnahmemittel in Horizontalrichtung verfahren wird, dann kann das Kupplungselement auf einfache Weise in Eingriff mit der Wand kommen und die Antriebsverbindung zu der Wand herstellen. Das Kupplungselement kann durch einen Träger gebildet sein, der in einem Pflanzbehälter angeordnet werden kann, der in eine Aufnahmeposition in der Kammer gebracht werden soll. Das Kupplungselement kann aber auch durch ein anderes Element am Lastaufnahmemittel gebildet sein.

In einer bevorzugten Ausgestaltung ist vorgesehen, dass die bewegliche Wand verformbar ist. Damit lässt sich die Bauhöhe der Gewächshausanordnung klein halten. Durch die Verformung der Wand kann die Wand zwar an der Beschickungsseite gestreckt gehalten werden. Eine derartige ebene Ausbildung ist aber außerhalb der Beschickungsseite nicht mehr erforderlich.

In einer bevorzugten Ausgestaltung ist die bewegliche Wand mit zwei Rollen verbunden, auf die sie aufwickelbar ist. Die Wand kann also als Rolltor mit gelenkig miteinander verbundenen Lamellen ausgebildet sein. Sie kann auch als Plane gebildet sein.

In einer bevorzugten Ausgestaltung ist vorgesehen, dass eine Hilfseinrichtung in der Kammer angeordnet ist, wobei die erste Position vor der Hilfseinrichtung angeordnet ist. Die Hilfseinrichtung kann im einfachsten Fall eine Strebe sein, die zwischen zwei Seitenwänden der Kammer angeordnet ist und zur Abstützung der Seitenwände gegeneinander dient. Die Hilfseinrichtung kann aber bevorzugterweise auch eine Klimatisierungseinrichtung sein, mit der innerhalb der Kammer ein vorbestimmtes Klima aufrechterhalten wird, also eine vorbestimmte Temperatur und eine vorbestimmte Feuchtigkeit.

In einer bevorzugten Ausgestaltung weist die Kammer eine Entnahmeseite auf, die der Beschickungsseite gegenüberliegt, wobei die Kammer an der Entnahmeseite durch eine zweite bewegliche Wand begrenzt ist, die eine zweite Öffnung aufweist, die aus einer ersten Position, in der die Kammer von außen nicht zugänglich ist, in eine zweite Position bewegbar ist, in der eine Aufnahmeposition in der Kammer von außen zugänglich ist. Für die zweite bewegliche Wand gilt dann das Gleiche wie für die erste bewegliche Wand. Solange kein Pflanzbehälter aus der Kammer entnommen wird, ist die zweite Wand geschlossen und verhindert damit den Zutritt von Schädlingen in die Kammer hinein. Lediglich dann, wenn ein Pflanzbehälter entnommen werden soll, wird die Öffnung in die zweite Position bewegt, in der dann lediglich eine Aufnahmeposition zugänglich ist. Dadurch, dass beim Entnehmen eines Pflanzbehälters die Öffnung durch den Pflanzbehälter und die darin befindlichen Pflanzen zumindest teilweise versperrt wird, ist das Risiko, dass während der Entnahme eines Pflanzbehälters aus der Kammer Schädlinge in die Kammer eindringen, ebenfalls gering. Man kann die Gewächshausanordnung dann sozusagen im Durchlaufverfahren betreiben. An der Beschickungsseite wird ein Pflanzbehälter eingesetzt. Der Pflanzbehälter durchläuft dann über einen gewissen Zeitraum die Entfernung von der Beschickungsseite zur Entnahmeseite. In dieser Zeit können die Pflanzen in dem Pflanzbehälter wachsen. Nach der Zeit wird der Pflanzbehälter dann an der Entnahmeseite entnommen. Den Transport des Pflanzbehälters durch die Kammer kann man beispielsweise dadurch bewerkstelligen, dass ein neu in die Kammer eingesetzter Pflanzbehälter einen bereits in der Kammer befindlichen Pflanzbehälter, sofern er an der gleichen Aufnahmeposition angeordnet ist, durch die Kammer hindurch schiebt. In den Aufnahmepositionen können Hilfsmittel angeordnet sein, die das Verschieben ermöglichen oder zumindest erleichtern, beispielsweise Rollen. Man kann ggfs. auch eine Transporteinrichtung in Form eines Bandes oder dergleichen vorsehen, mit der dann die Pflanzbehälter durch die Kammer bewegt werden.

Bevorzugterweise ist in der Entnahmeseite ein zweites Regalbediengerät angeordnet. Mit dem zweiten Regalbediengerät können die Pflanzbehälter aus der jeweiligen Aufnahmeposition entnommen und nach unten verfahren werden. Wenn das Regalbediengerät auch noch in einer weiteren Richtung verfahrbar ist, beispielsweise parallel zu der Entnahmeseite, dann können die Pflanzbehälter auch von der Kammer wegbewegt werden.

Vorzugsweise weist das zweite Regalbediengerät einen zweiten Hubwagen auf. Für den zweiten Hubwagen gelten dann die gleichen Vorteile, wie für den ersten Hubwagen.

Vorzugsweise weisen die zweite Wand und der zweite Hubwagen eine zweite Kupplungsanordnung auf, mit der die zweite Wand und der zweite Hubwagen in Eingriff bringbar sind.

Die Erfindung wird im Folgenden anhand eines bevorzugten Ausführungsbeispiels in Verbindung mit der Zeichnung beschrieben. Hierin zeigen:

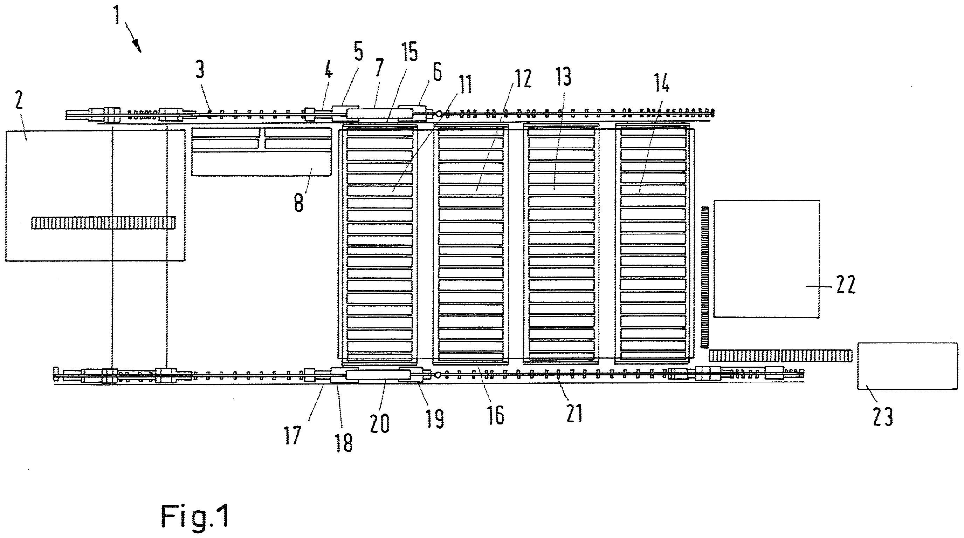

- Fig. 1: eine Draufsicht auf eine Gewächshausanordnung mit mehreren Gewächshäusern,
- Fig. 2: eine perspektivische Darstellung der Gewächshausanordnung nach Fig. 1,
- Fig. 3: ein schematische Schnittansicht einer Kammer in geschlossenem Zustand,
- Fig. 4: Ansicht nach Fig. 3 der Kammer mit einer Öffnung in einer Zugangsposition und
- Fig. 5: eine vergrößerte Darstellung der beweglichen Wand im Bereich ihrer Öff-nung.

Eine Anlage 1 zum Erzeugen von Pflanzen weist einen Saatbereich 2 auf, in dem nicht näher dargestellte Pflanzschalen mit Erde oder einem anderen für die Aufzucht von Pflanzen geeigneten Substrat gefüllt werden können, wobei Samen, Keimlinge, Setzlinge oder dergleichen in die Erde oder das Substrat eingebracht werden können. Die Pflanzschalen werden dann in Pflanzbehälter eingesetzt, die ggfs. noch mit einer Nährlösung und/oder Wasser gefüllt werden.

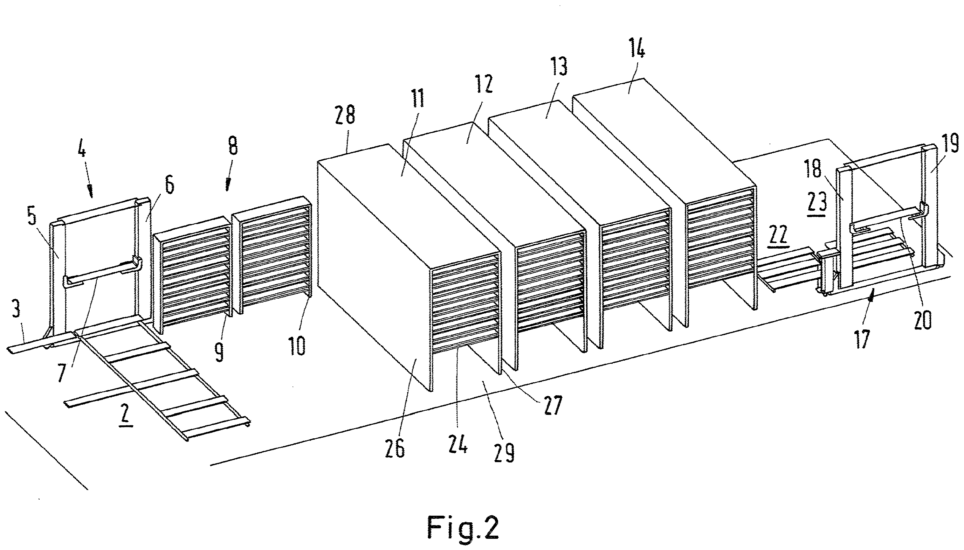

An einer Stirnseite des Saatbereichs 2 ist eine Schienenanordnung 3 angeordnet, auf der ein Regalbediengerät 4 verfahrbar ist. Das Regalbediengerät 4 weist zwei Masten 5, 6 auf, zwischen denen ein Hubwagen 7 angeordnet ist. Das Regalbediengerät 4 kann die Pflanzschalen aus dem Saatbereich 2 abholen und in einen Keimbereich 8 verbringen, in dem mehrere Keimschränke 9, 10 (Fig. 2) angeordnet sind. Die Keimschränke können durch das Regalbediengerät 4 beschickt werden.

Das Regalbediengerät 4 kann weiterhin vor eine von mehreren Gewächshausanordnungen 11, 12, 13, 14 verfahren werden. Jede dieser Gewächshausanordnungen weist eine Beschickungsseite 15 und eine Entnahmeseite 16 auf.

An der Entnahmeseite 16 ist ein zweites Regalbediengerät 17 mit zwei Masten 18, 19 angeordnet, zwischen denen ein Hubwagen 20 mit einem nicht näher dargestellten Lastaufnahmemittel angeordnet ist. Das Regalbediengerät 17 ist auf einer Schienenanordnung 21 vor den Entnahmeseiten 16 der Gewächshausanordnungen 11-14 verfahrbar in einen Erntebereich 22 und einen Waschbereich 23. Es ist darüber hinaus wieder zurück in den Saatbereich 2 verfahrbar.

Die Schienenanordnungen 3, 21 lassen sich beliebig verlängern, so dass die Länge der Schienenanordnungen 3, 21 an die Anzahl der Gewächshausanordnungen 11-14 angepasst werden kann. Die Anlage 1 ist damit auf einfache Weise skalierbar. Durch Hinzufügen oder Wegnehmen einer Gewächshausanordnung 11-14 lässt sich die Größe der Anlage 1 verändern.

Die Beschickungsseiten 15 aller Gewächshausanordnungen 11-14 sind in einer gemeinsamen ersten Ebene angeordnet und das erste Regalbediengerät 4 ist parallel zu dieser ersten Ebene verfahrbar. Die Entnahmeseiten 16 aller Gewächshausanordnungen 11-14 sind in einer zweiten Ebene angeordnet und das Regalbediengerät 17 ist parallel zu der zweiten Ebene verfahrbar.

Wie man beispielsweise in Fig. 2 erkennen kann, weist jede Gewächshausanordnung 11-14 mehrere übereinander angeordnete Aufnahmepositionen 24 für die oben beschriebenen Pflanzbehälter auf. Die Pflanzbehälter können in jeder der Aufnahmepositionen 24 an der Beschickungsseite 15 eingesetzt und an der Entnahmeseite 16 entnommen werden. Jede Aufnahmeposition 24 kann hierzu mit zwei Rollenleisten an ihren beiden Seiten versehen sein, so dass die Pflanzbehälter auf diesen Rollenleisten mit geringem Kraftaufwand verschoben werden können. Andere Möglichkeiten, um das Verschieben derartiger Pflanzbehälter zu erleichtern, sind denkbar.

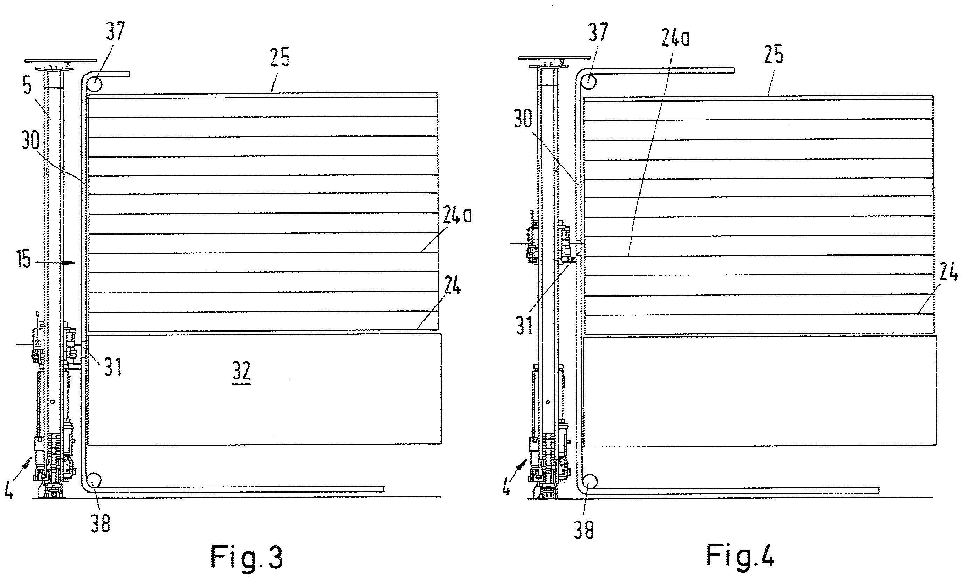

Die Aufnahmepositionen 24 sind in einer Kammer 25 (Fig. 3 und 4) angeordnet, die allseitig geschlossen ist. In Fig. 2 sind hierbei zwei Seitenwände 26, 27 und eine Deckenwand 28 erkennbar. Die untere Begrenzung wird durch einen Fußboden 29 gebildet. Es kann hier allerdings auch eine weitere eigene Wand vorgesehen sein.

Um den Einsatz von Schädlingsbekämpfungsmitteln, wie Insektiziden oder Pestiziden, zu vermeiden oder gering zu halten, sollten die Kammern 25 während des Wachstums der Pflanzen insgesamt geschlossen gehalten werden, um den Zutritt von Schädlingen zu verhindern.

Hierzu weist die Kammer (neben den bereits geschilderten vier Wänden 26-28) an der Beschickungsseite 15 eine erste bewegliche Wand 30 auf, die nachfolgend erläutert wird. An der Entnahmeseite 16 ist eine gleichartige Wand angeordnet, für die die nachfolgende Erläuterung in gleicher Weise gilt.

Die Wand 30 ist beweglich und weist eine Öffnung 31 auf, die aus einer ersten Position, in der die Kammer 25 von außen nicht zugänglich ist (Fig. 3) in eine zweite Position bewegt werden kann, in der eine Aufnahmeposition 24a in der Kammer von außen zugänglich ist (Fig. 4). In der Kammer 25 ist eine Hilfseinrichtung 32 angeordnet, beispielsweise eine Klimatisierungseinrichtung. Die Öffnung 31 kann in der ersten Position vor diese Hilfseinrichtung 32 verfahren werden, so dass die Hilfseinrichtung 32 die Öffnung 31 abdeckt und so einen Zutritt von außen durch die Öffnung 31 in die Kammer 25 hinein verhindert.

In der zweiten Position ist hingegen lediglich eine der Aufnahmepositionen 24a von außen zugänglich, wobei durch die Öffnung 31 ein Pflanzbehälter von außen in die Aufnahmeposition 24a eingebracht werden kann.

Für die Entnahmeseite 16 gilt das Gleiche. Auch hier ist die bewegliche Wand mit einer Öffnung versehen, die in eine erste Position verfahren werden kann, in der die Kammer an der Entnahmeseite 16 geschlossen ist, und in eine zweite Position, an der eine der Aufnahmepositionen 24, 24a zugänglich ist. Wenn die Öffnung in der zweiten Position steht, dann kann ein Pflanzbehälter aus der Kammer 25 entnommen werden.

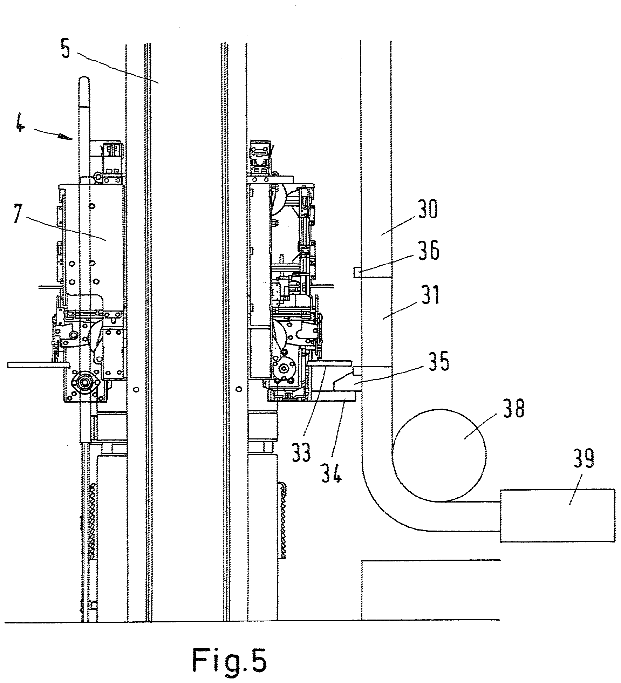

Fig. 5 zeigt einen vergrößerten Teil der Wand 30 und des Regalbediengeräts 4, so dass weitere Einzelheiten erkennbar sind. In Fig. 5 ist eine Ausführungsform dargestellt, die geringfügig von der in den Fig. 3 und 4 abweicht.

Der Hubwagen 7 des Regalbediengeräts 4 ist an den Masten 5, 6 vertikal verfahrbar. Der Hubwagen weist ein Lastaufnahmemittel 33 auf, das horizontal verfahren werden kann. Das Lastaufnahmemittel 33 ist in eine Richtung bewegbar, die senkrecht zu den Masten 5, 6 und senkrecht zur Schienenanordnung 3 gerichtet ist.

Mit dem Lastaufnahmemittel verbunden ist ein Kupplungselement 34, das mit einem Gegenelement 35 an der Wand 30 in Eingriff gebracht werden kann, wenn das Lastaufnahmemittel 33 in Richtung auf die Wand 30 verfahren wird. Das Kupplungselement 34 und das Gegenelement 35 bilden eine Kupplungsanordnung. Die Bewegung des Kupplungselements 34 in Richtung auf die Wand 30 kann begrenzt sein, während das Lastaufnahmemittel 33 weiterbewegt werden kann, um durch die Öffnung 31 in die Kammer 25 einzudringen. Ein auf dem Lastaufnahmemittel 33 vorgesehener Pflanzbehälter kann dann in einer Aufnahmeposition 24, 24a abgesetzt werden. Das Kupplungselement 34 kann auch auf andere Weise am Hubwagen 7 angeordnet sein.

Die Kupplungsanordnung 34, 35 kann die Bewegung des Hubwagens 7 unmittelbar auf die Wand 30 übertragen, so dass die Öffnung 31 sich synchron mit dem Hubwagen 7 bewegt. Die Kupplungsanordnung 34, 35 ist lösbar. Im eingerückten Zustand, also wenn das Kupplungselement 34 mit dem Gegenelement 35 verbunden ist, kann die Kupplungsanordnung allerdings Kräfte in beide Bewegungsrichtungen übertragen, so dass die Wand 30 mit der Öffnung 31 sowohl nach oben als auch nach unten bewegt werden kann.

Die Öffnung 31 weist einen verstärkten Rand 36 auf. Der verstärkte Rand 36 sorgt dafür, dass die Kontur der Öffnung 31 auch bei einer dünnen Wand 30 erhalten bleibt.

Die Wand 30 ist, wie man in Fig. 3 und 4 erkennen kann, über zwei Umlenkrollen 37, 38 geführt. Da die Wand 30 verformbar ist, kann sie an den Umlenkrollen 37, 38 umgelenkt werden und die Bereiche, die nicht zum Abdecken der Beschickungsseite 15 bzw. der Entnahmeseite 16 verwendet werden, können dann in Bereichen außerhalb der Kammer untergebracht werden.

Fig. 5 zeigt eine abgewandelte Ausgestaltung. Hier wird die Wand 30 ebenfalls über die Umlenkrolle 38 geführt und gelangt dann in eine Aufnahmeeinrichtung 39, in der sie beispielsweise aufgewickelt oder zusammengefaltet werden kann. Eine entsprechende Aufnahmeeinrichtung 39 kann auch an dem Ende der beweglichen Wand 30 vorgesehen sein, die in Fig. 5 nicht dargestellt ist.

Die Wand 30 kann beispielsweise als Rolltor oder als Falttor mit beweglich miteinander verbundenen Lamellen ausgebildet sein. Die Wand 30 kann auch durch eine dicke Plane gebildet sein, die aufgewickelt werden kann.

Wie oben erwähnt, sind die Beschickungsseiten 15 in einer ersten Ebene angeordnet und die Entnahmeseiten 16 sind in einer zweiten Ebene angeordnet. Parallel zu beiden Ebenen ist jeweils ein Regalbediengerät verfahrbar, so dass die Gewächshausanordnungen 11-14 im Durchlaufverfahren mit den Pflanzbehältern beschickt werden können, wobei das Regalbediengerät 4 für die Beschickung zuständig ist und das Regalbediengerät 17 für die Entnahme der Pflanzbehälter aus den Gewächshausanordnungen 11-14.

Regalbediengeräte 4, 17 haben den Vorteil, dass sie die Pflanzbehälter in drei Raumrichtungen verlagern können. Die erste Raumrichtung wird durch die Schienenanordnung 3 (bzw. eine ähnliche Schienenanordnung 21 für das Regalbediengerät 17) definiert. Die zweite Raumrichtung wird durch die Masten 5, 6 definiert. Die dritte Raumrichtung wird durch die Bewegungsrichtung der Lastaufnahmemittel 7 definiert.

Es ist auch möglich, nur an einer Stirnseite der Gewächshausanordnungen 11-14 ein Regalbediengerät 4 vorzusehen, das dann sowohl für die Beschickung als auch für die Entnahme der Pflanzbehälter zuständig ist.

Die Keimschränke 9, 10 können ähnlich ausgebildet sein wie die Gewächshausanordnungen 11-14. Da die Keimzeit in der Regel kürzer ist als die Wachstumszeit der Pflanzen, können die Keimschränke 9, 10 kleiner als die Gewächshausanordnungen 11-14 sein, beispielsweise niedriger und kürzer. Dementsprechend weist die Keimposition 8 eine geringere Aufnahmekapazität als die Gewächshausanordnungen 11-14 auf.

Es ist zweckmäßig, wenn die Vorbereitungsposition, also der Saatbereich 2, und die Entladeposition, also der Erntebereich 22 und ggfs. der Waschbereich 23, auf unterschiedlichen Seiten der Gewächshausanordnungen 11-14 angeordnet sind. Die einzelnen Funktionsbereiche können damit räumlich entkoppelt werden.

Zumindest das Regalbediengerät 4 an der Beschickungsseite weist eine Antriebssteuerung auf, die eine Beschleunigung einer Verfahrbewegung des Regalbediengeräts 4 auf der Schienenanordnung 3 begrenzt. Ein Regalbediengerät hat üblicherweise eine sehr hohe Beschleunigung, um Förderzeiten, wie sie beispielsweise in einem Hochregallager auftreten, kleinzuhalten. Hierzu ist eine hohe Beschleunigung notwendig. Im vorliegenden Fall könnte eine zu große Beschleunigung allerdings dazu führen, dass eine Flüssigkeit, die in einen Pflanzbehälter eingefüllt worden ist, austritt und damit die Umgebung verschmutzt. Um einen derartigen Schadensfall zu vermeiden, ist die Beschleunigung auf den Maximalwert begrenzt. Der Maximalwert ist so gewählt, dass auch bei einer Beschleunigung mit dem Maximalwert die Flüssigkeit nicht aus dem Pflanzbehälter austreten kann.

Die Verwendung von zwei Masten am Hubwagen 5, 6 hat den Vorteil, dass Pflanzbehälter, die durch das Lastaufnahmemittel 33 am Hubwagen 7 aufgenommen worden sind, mit ausreichender Genauigkeit horizontal gehalten werden können, so dass wiederum das Risiko eines Überlaufens von Flüssigkeit aus dem Pflanzbehälter kleingehalten werden kann.

Die Gewächshausanordnungen 11-14 müssen nicht alle gleich ausgebildet sein. Wenn nur ein Regalbediengerät 4 verwendet wird, reicht es aus, die Beschickungsseiten 15 in einer Ebene anzuordnen. Wenn zwei Regalbediengeräte 4, 17 verwendet werden, ist Voraussetzung, dass sowohl die Beschickungsseiten 15 als auch die Entnahmeseiten 16 jeweils in einer Ebene angeordnet sind. Im Übrigen können die Gewächshausanordnungen 11-14 durchaus unterschiedliche Höhen aufweisen. Auch können die Abstände zwischen Aufnahmepositionen 24, 24a unterschiedlich sein, um beispielsweise unterschiedlich hohe Pflanzen in unterschiedlichen Gewächshausanordnungen 11-14 heranziehen zu können.

Da die Kammer 25 beim Beschicken und Entladen weitgehend geschlossen bleibt, weil nur über die Öffnung eine Verbindung zur Umgebung möglich ist, kann auch die Atmosphäre in der Kammer 25, insbesondere Temperatur und Feuchtigkeit, gut kontrolliert und gesteuert werden.

Falls erforderlich, kann die Öffnung 31 auch noch in eine Position zwischen zwei Aufnahmepositionen verfahren werden, beispielsweise, um Reperaturarbeiten in der Kammer 25 und einen dabei erforderlichen Austausch von Ersatzteilen vornehmen zu können. Ersatzteile können beispielsweise Träger von Beleuchtungseinrichtungen sein. Dies gilt unabhängig davon, ob ein oder zwei Regalbediengeräte vorgesehen sind.

## Patentansprüche

1. Gewächshausanordnung mit einer Kammer (25), in der mehrere Aufnahmepositionen (24, 24a) für Pflanzbehälter übereinander angeordnet sind, die von einer Beschickungsseite (15) der Kammer (25) aus zugänglich sind, **dadurch gekennzeichnet, dass** die Kammer (25) an der Beschickungsseite (15) durch eine bewegliche Wand (30) begrenzt ist, die eine Öffnung (31) aufweist, die aus einer ersten Position, in der die Kammer (25) von außen nicht zugänglich ist, in mindestens eine zweite Position bewegbar ist, in der eine der Aufnahmepositionen (24, 24a) in der Kammer (25) von außen zugänglich ist, wobei die bewegliche Wand (30) so ausgebildet ist, dass sie die Beschickungsseite (15) nicht vollständig frei gibt, sondern die Öffnung (31) immer nur einen Teil davon, der für das Beschicken oder gegebenenfalls entnehmen von Pflanzenbehältern erforderlich ist, frei gibt.

2. Gewächshausanordnung nach Anspruch 1, **dadurch gekennzeichnet, dass** die Öffnung (31) eine Höhe aufweist, die an den Abstand zwischen benachbarten Aufnahmepositionen (24, 24a) angepasst ist.

3. Gewächshausanordnung nach Anspruch 1 oder 2, **dadurch gekennzeichnet, dass** die Öffnung (31) einen verstärkten Rand (36) aufweist.

4. Gewächshausanordnung nach einem der Ansprüche 1 bis 3, **dadurch gekennzeichnet, dass** an der Beschickungsseite (15) ein Regalbediengerät (4) angeordnet ist, das einen Hubwagen aufweist (7).

5. Gewächshausanordnung nach Anspruch 4, **dadurch gekennzeichnet, dass** die Wand (30) und der Hubwagen (7) eine Kupplungsanordnung (34, 35) aufweisen, mit der die Wand (30) und der Hubwagen (7) lösbar in Eingriff bringbar sind.

6. Gewächshausanordnung nach Anspruch 5, **dadurch gekennzeichnet, dass** der Hubwagen (7) ein Lastaufnahmemittel (33) aufweist, das am Hubwagen (7) in Horizontalrichtung verfahrbar ist, wobei die Kupplungsanordnung (34, 35) ein Kupplungselement (34) aufweist, das am Lastaufnahmemittel (33) angeordnet ist.

7. Gewächshausanordnung nach einem der Ansprüche 1 bis 6, **dadurch gekennzeichnet, dass** die bewegliche Wand (30) verformbar ist.

8. Gewächshausanordnung nach Anspruch 7, **dadurch gekennzeichnet, dass** die bewegliche Wand (30) mit zwei Rollen verbunden ist, auf die sie aufwickelbar ist.

9. Gewächshausanordnung nach einem der Ansprüche 1 bis 8, **dadurch gekennzeichnet, dass** eine Hilfseinrichtung (32) in der Kammer (25) angeordnet ist, wobei die erste Position vor der Hilfseinrichtung (32) angeordnet ist.

10. Gewächshausanordnung nach einem der Ansprüche 1 bis 9, **dadurch gekennzeichnet, dass** die Kammer (25) eine Entnahmeseite (16) aufweist, die der Beschickungsseite (15) gegenüberliegt, wobei die Kammer (25) an der Entnahmeseite (16) durch eine zweite bewegliche Wand begrenzt ist, die eine zweite Öffnung aufweist, die aus einer ersten Position, in der die Kammer (25) von außen nicht zugänglich ist, in eine zweite Position bewegbar ist, in der eine Aufnahmeposition (24, 24a) in der Kammer (25) von außen zugänglich ist.

11. Gewächshausanordnung nach Anspruch 10, **dadurch gekennzeichnet, dass** an der Entnahmeseite (16) ein zweites Regalbediengerät (17) angeordnet ist.

12. Gewächshausanordnung nach Anspruch 11, **dadurch gekennzeichnet, dass** zweite Regalbediengerät (17) einen zweiten Hubwagen (20) aufweist.

13. Gewächshausanordnung nach Anspruch 12, **dadurch gekennzeichnet, dass** die zweite Wand und der zweite Hubwagen (17) eine zweite Kupplungsanordnung aufweisen, mit der die zweite Wand und der zweite Hubwagen (17) in Eingriff bringbar sind.

## Claims

1. Greenhouse arrangement having a chamber (25) in which a plurality of receiving positions (24, 24a) for plant containers are arranged one above the other and are accessible from a loading side (15) of the chamber (25), **characterized in that** the chamber (25) is delimited on the loading side (15) by a moveable wall (30) which comprises an opening (31) which can be moved from a first position in which the chamber (25) is inaccessible from the outside into at least a second position in which one of the receiving positions (24, 24a) in the chamber (25) is accessible from the outside, the moveable wall (30) being designed in such a way that it does not completely expose the loading side (15), but the opening (31) always exposes only a part thereof which is required for loading or, as the case will be, removing plant containers.

2. Greenhouse arrangement according to claim 1, **characterized in that** the opening (31) comprises a height which is adapted to the distance between adjacent receiving positions (24, 24a).

3. Greenhouse arrangement according to claim 1 or 2, **characterized in that** the opening (31) comprises a reinforced edge (36).

4. Greenhouse arrangement according to any of claims 1 to 3, **characterized in that** a storage and retrieval device (4) is arranged on the loading side (15), which storage and retrieval device (4) comprises a lifting carriage (7).

5. Greenhouse arrangement according to claim 4, **characterized in that** the wall (30) and the lifting carriage (7) comprise a coupling arrangement (34, 35) with which the wall (30) and the lifting carriage (7) can be releasably brought into engagement.

6. Greenhouse arrangement according to claim 5, **characterized in that** the lifting carriage (7) comprises a load receiving means (33) which can be moved on the lifting carriage (7) in the horizontal direction, the coupling arrangement (34, 35) comprising a coupling element (34) which is arranged on the load receiving means (33).

7. Greenhouse arrangement according to any of claims 1 to 6, **characterized in that** the moveable wall (30) is deformable.

8. Greenhouse arrangement according to claim 7, **characterized in that** the moveable wall (30) is connected to two rollers onto which it can be rolled.

9. Greenhouse arrangement according to any of claims 1 to 8, **characterized in that** an auxiliary device (32) is arranged in the chamber (25), the first position being arranged in front of the auxiliary device (32).

10. Greenhouse arrangement according to any of claims 1 to 9, **characterized in that** the chamber (25) has an unloading side (16) which is opposite the loading side (15), the chamber (25) being delimited at the unloading side (16) by a second moveable wall which comprises a second opening which is moveable from a first position, in which the chamber (25) is not accessible from the outside, into a second position, in which a receiving position (24, 24a) in the chamber (25) is accessible from the outside.

11. Greenhouse arrangement according to claim 10, **characterized in that** a second storage and retrieval device (17) is arranged on the unloading side (16).

12. Greenhouse arrangement according to claim 11, **characterized in that** the second storage and retrieval device (17) comprises a second lifting carriage (20).

13. Greenhouse arrangement according to claim 12, **characterized in that** the second wall and the second lifting carriage (17) comprise a second coupling arrangement with which the second wall and the second lifting carriage (17) are engageable.

## Revendications

1. Agencement pour serre avec une chambre (25) dans laquelle sont disposées l'une sur l'autre plusieurs positions de réception (24, 24a) pour conteneurs de plantes, qui sont accessibles depuis un côté de chargement (15) de la chambre (25), **caractérisé en ce que** la chambre (25) est délimitée sur le côté de chargement (15) par une paroi mobile (30), qui comporte une ouverture (31), qui peut être déplacée d'une première position dans laquelle la chambre (25) n'est pas accessible de l'extérieur, dans au moins une deuxième position dans laquelle une des positions de réception (24, 24a) dans la chambre (25) est accessible de l'extérieur, sachant que la paroi mobile (30) est constituée de telle manière qu'elle ne libère pas complètement le côté de chargement (15), mais l'ouverture (31) libère toujours seulement une partie de celui-ci, qui est nécessaire pour le chargement ou le cas échéant l'enlèvement de conteneurs de plantes.

2. Agencement pour serre selon la revendication 1, **caractérisé en ce que** l'ouverture (31) comporte une hauteur, qui est adaptée à la distance entre les positions de réception voisines (24, 24a).

3. Agencement pour serre selon la revendication 1 ou 2, **caractérisé en ce que** l'ouverture (31) comporte un bord renforcé (36).

4. Agencement pour serre selon l'une quelconque des revendications 1 à 3, **caractérisé en ce qu'**un gerbeur transstockeur (4), qui comporte un chariot élévateur (7), est disposé sur le côté de chargement (15).

5. Agencement pour serre selon la revendication 4, **caractérisé en ce que** la paroi (30) et le chariot élévateur (7) comportent un système d'accouplement (34, 35) avec lequel la paroi (30) et le chariot élévateur (7) peuvent être mis en prise de façon amovible.

6. Agencement pour serre selon la revendication 5, **caractérisé en ce que** le chariot élévateur (7) comporte un moyen de logement de charge (33), qui peut être déplacé sur le chariot élévateur (7) en direction horizontale, sachant que le système d'accouplement (34, 35) comporte un élément d'accouplement (34), qui est disposé sur le moyen de logement de charge (33).

7. Agencement pour serre selon l'une quelconque des revendications 1 à 6, **caractérisé en ce que** la paroi mobile (30) peut être déformée.

8. Agencement pour serre selon la revendication 7, **caractérisé en ce que** la paroi mobile (30) est reliée à deux rouleaux sur lesquels elle peut être enroulée.

9. Agencement pour serre selon l'une quelconque des revendications 1 à 8, **caractérisé en ce qu'**un système d'assistance (32) est disposé dans la chambre (25), sachant que la première position est disposée avant le système d'assistance (32).

10. Agencement pour serre selon l'une quelconque des revendications 1 à 9, **caractérisé en ce que** la chambre (25) comporte un côté enlèvement (16), qui est opposé au côté de chargement (15), sachant que la chambre (25) est délimitée sur le côté enlèvement (16) par une deuxième paroi mobile , qui comporte une deuxième ouverture, qui peut être déplacée d'une première position , dans laquelle la chambre (25) n'est pas accessible de l'extérieur, dans une deuxième position, dans laquelle une position de réception (24, 24a) dans la chambre (25) est accessible de l'extérieur.

11. Agencement pour serre selon la revendication 10, **caractérisé en ce qu'**un deuxième transstockeur (17) est disposé sur le côté enlèvement (16).

12. Agencement pour serre selon la revendication 11, **caractérisé en ce que** le deuxième transstockeur (17) comporte un deuxième chariot élévateur (20).

13. Agencement pour serre selon la revendication 12, **caractérisé en ce que** la deuxième paroi et le deuxième chariot élévateur (17) comportent un deuxième système d'accouplement avec lequel la deuxième paroi et le deuxième chariot élévateur (17) peuvent être mis en prise.
